# EUROPÄISCHE PATENTANMELDUNG

(11) **EP 2 213 908 A1**
(43) Veröffentlichungstag der Anmeldung: **04.08.2010**
(21) Anmeldenummer: 09177980.1
(22) Anmeldetag: 04.12.2009
(51) Int. Cl.: F16H 55/22

(54) **Kunststoff-Spritzguss-Zahnrad, Getriebe sowie Verstellantrieb**

(30) Priorität: 02.02.2009 DE 102009000546
(71) Anmelder: Robert Bosch GmbH, 70442 Stuttgart (DE)
(72) Erfinder: Fiedler, Max, 70806 Kornwestheim (DE); Bohr, Peter, 76137 Karlsruhe (DE)

(57) **Zusammenfassung**

Die Erfindung betrifft ein Kunststoff-Spritzguss-Zahnrad (1), umfassend einen äußeren Zahnkranzabschnitt (2), der über einen umlaufenden Radialringsteg (4) mit einem inneren Radabschnitt (5) verbunden ist. Erfindungsgemäß ist vorgesehen, dass der Radialringsteg (4) axial außermittig in Bezug auf die Axialerstreckung des Zahnkranzabschnittes (2) angeordnet ist. Ferner betrifft die Erfindung ein Getriebe sowie einen Verstellantrieb.

## Beschreibung

### Stand der Technik

Die Erfindung betrifft ein Kunststoff-Spritzguss-Zahnrad gemäß dem Oberbegriff des Anspruchs 1, ein ein derartiges Zahnrad aufweisendes Getriebe gemäß Anspruch 9 sowie einen ein derartiges Getriebe aufweisenden Verstellantrieb gemäß Anspruch 10.

Aus der DE 10 2004 028 610 A1 ist ein Verstellantrieb, umfassend ein Schneckengetriebe, mit einem Scheckenzahnrad bekannt, wobei eine elektromotorisch angetriebene Getriebeschnecke mit einem radial äußeren Zahnradabschnitt des Schneckenzahnrades kämmt. Bei dem Schneckenzahnrad handelt es sich um ein Kunststoff-Spritzgussteil, wobei der radial äußere, mit der Getriebeschnecke kämmende Zahnkranzabschnitt des Schneckenzahnrades über einen Radialringsteg mit einem inneren Radabschnitt des Schneckenzahnrades verbunden ist. Dabei befindet sich der Radialringsteg auf halber Axialerstreckung des Zahnradabschnittes, so dass eine gedachte, auf halber Axialerstreckung des Radialringsteges liegende Radialebene die Getriebeschneckelängsmittelachse in sich aufnimmt. Anders ausgedrückt befindet sich die axiale Mitte des Radialringsteges unmittelbar auf der axialen Höhe des Eingriffsbereichs des Zahnkranzabschnittes des Schneckenzahnrades mit der Getriebeschnecke. Das bekannte Schneckenzahnrad hat sich bewährt. Es existiert jedoch nach dem Spritzgießen eine Tendenz zur Bildung von Einfallstellen im Kunststoff radial benachbart zum Eingriffsbereich der Verzahnung.

Offenbarung der Erfindung

Der Erfindung liegt die Aufgabe zugrunde, ein Kunststoff-Spritzguss-Zahnrad vorzuschlagen, bei dem die Tendenz zur Bildung von Einfallstellen unmittelbar benachbart zum Eingriffsbereich der Verzahnung minimiert ist. Ferner besteht die Aufgabe darin, ein Getriebe mit einem entsprechend optimierten Zahnrad sowie einem Verstellantrieb mit einem entsprechend optimierten Getriebe anzugeben.

Diese Aufgabe wird hinsichtlich des Kunststoff-Spritzguss-Zahnrades mit den Merkmalen des Anspruchs 1, hinsichtlich des Getriebes mit den Merkmalen des Anspruchs 9 und hinsichtlich des Verstellantriebs mit den Merkmalen des Anspruchs 10 gelöst. Vorteilhafte Weiterbildungen der Erfindung sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung hat erkannt, dass die Tendenz zur Einfallstellenbildung im Eingriffsbereich der Verzahnung des Kunststoff-Spritzguss-Zahnrades auf die Kunststoffmassekonzentration unmittelbar radial benachbart zum Eingriffsbereich zurückzuführen ist. Um Einfallstellen und Lunkerbildung unmittelbar radial benachbart zum Eingriffsbereich zu minimieren, schlägt die Erfindung daher vor, den Radialringsteg, mit dem der äußere Zahnkranzabschnitt des Kunststoff-Spritzgussrades an den radial inneren Radabschnitt angebunden ist, nicht wie im Stand der Technik in der Mitte der Axialerstreckung des Zahnradabschnittes anzuordnen, sondern außermittig in Bezug auf die Axialerstreckung des Zahnkranzabschnittes. Anders ausgedrückt soll bei einem nach dem Konzept der Erfindung ausgebildeten Kunststoff-Spritzguss-Zahnrad eine gedachte, auf der halben Axialerstreckung des Radialringstegs angeordnete Radialebene axial beabstandet sein von einer gedachten, auf der halben Axialerstreckung des Zahnkranzabschnittes angeordneten Radialebene. Hierdurch kann eine zu Lunkerbildung und Einfallstellen führende Materialanhäufung unmittelbar benachbart zum Eingriffsbereich des Kunststoff-Spritzguss-Zahnrades mit einem weiteren Getriebeelement, insbesondere einer Getriebeschnecke, reduziert oder bevorzugt sogar vermieden werden.

Besonders bevorzugt ist eine Ausführungsform des Kunststoff-Spritzguss-Zahnrades, bei der der Radialringsteg, der den äußeren Zahnkranzabschnitt mit dem inneren Radabschnitt des Zahnrades verbindet, in einem axialen Endbereich des Zahnkranzabschnittes angeordnet ist, wobei es sowohl denkbar ist, den Radialringsteg in einem oberen, insbesondere einem Mitnehmer zugewandten, Bereich des Zahnkranzabschnittes oder alternativ in einem unteren, insbesondere von einem Mitnehmer abgewandten, Bereich des Zahnkranzabschnittes anzuordnen. Auf diese Weise ist realisierbar, dass der Radialringsteg in axialer Richtung nicht bis zur halben Axialerstreckung des Zahnkranzabschnittes reicht.

Ganz besonders bevorzugt ist eine Ausführungsform des Kunststoff-Spritzguss-Zahnrades, bei der der Radialringsteg in radialer Richtung, zumindest näherungsweise, bündig mit einer axialen Stirnseite des Zahnkranzabschnittes, entweder mit einer oberen oder unteren Stirnseite des Zahnkranzabschnittes, abschließt und dabei bevorzugt in axialer Richtung nicht bis zur halben Axialerstreckung des Zahnkranzabschnittes reicht. Durch die Anordnung des Radialringsteges in einem axialen Endbereich des Zahnkranzabschnittes können gegenläufige Scherströmungen, wie sie beim Spritzgießen von Zahnrädern nach dem Stand der Technik auftreten vermieden werden.

In Weiterbildung der Erfindung ist mit Vorteil vorgesehen, zur Erhöhung der Robustheit des Zahnrades, den Zahnradabschnitt zusätzlich zu dem Radialringsteg über in Umfangsrichtung voneinander beabstandete Radialstege an den inneren Radabschnitt anzubinden. Die Anzahl der Radabschnitte richtet sich dabei bevorzugt nach der zu erwartenden Belastung im Betrieb eines mit einem nach dem Konzept der Erfindung ausgestatteten Kunststoff-Spritzguss-Zahnrad ausgestatteten Getriebes. Besonders bevorzugt ist es, wenn diese Radialstege nicht auf beiden Axialseiten des Radialringsteges angeordnet sind, sondern nur auf einer Axialseite.

Besonders zweckmäßig ist es, wenn die für eine ausreichende Festigkeit des Zahnrades sorgenden Radialstege zur Optimierung des Gleichlaufverhaltens des Zahnrades gleichmäßig in Umfangsrichtung verteilt angeordnet sind.

Besonders bevorzugt ist eine Ausführungsform des Kunststoff-Spritzguss-Zahnrades, bei der ein Übergangsbereich zwischen dem Radialringsteg und dem sich in axialer Richtung dazu erstreckenden Zahnkranzabschnitt eine gedachte Kugel mit einem Durchmesser von weniger als 1,6mm aufnehmbar ist. Ganz besonders bevorzugt beträgt der Durchmesser einer solchen gedachten Kugel etwa 1,4mm. Aufgrund der Minimierung des Übergangsbereichs wird gleichzeitig auch die Materialanhäufung des Übergangsbereichs minimiert, mit der Folge, dass die Tendenz zur Bildung von Einfallstellen und Lunkern minimiert ist.

Idealerweise ist das Zahnrad aus einem Thermoplastmaterial, insbesondere aus Polyoxymethylen (POM), gespritzt. Beispielsweise kann hierzu das unter "Delrin 100NC010" auf dem Markt erhältliche Polyoxymethylen eingesetzt werden.

Weiter bevorzugt sind zur Herstellung, d.h. zum Spritzgießen des Zahnrades drei gleichmäßig in Umfangsrichtung verteilt angeordnete Anspritzpunkte vorgesehen.

In Weiterbildung der Erfindung ist mit Vorteil vorgesehen, dass es sich bei dem Zahnrad um ein Schneckenrad (Scheckenzahnrad) handelt, das an seinem Außenumfang, d.h. am Zahnkranzabschnitt eine Schneckenverzahnung trägt, die zum Zusammenwirken mit einer Getriebeschnecke ausgebildet und angeordnet ist.

Die Erfindung führt auch auf ein Getriebe, insbesondere ein Schneckengetriebe, mit mindestens einem wie zuvor beschrieben ausgebildeten Zahnrad. Dabei ist es besonders bevorzugt wenn eine gedachte, auf halber Axialerstreckung des Radialringstegs liegende Radialebene mit Axialabstand zur Längsmittelachse einer mit dem Zahnrad kämmenden Getriebeschnecke angeordnet ist.

Ferner führt die Erfindung auf einen Verstellantrieb, vorzugsweise für Kraftfahrzeuganwendungen. Ganz besonders bevorzugt handelt es sich um einen elektromotorischen Verstellantrieb, bei dem ein wie zuvor beschrieben ausgebildetes Getriebe mit einem Elektromotor angetrieben ist.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen in:
- Fig. 1: eine perspektivische Ansicht eines als Schneckenzahnrad ausgebildeten Kunststoff-Spritzguss-Zahnrades, und
- Fig. 2: eine Längsschnittansicht des Zahnrades gemäß Fig. 1.

In den Figuren sind gleiche Elemente und Elemente mit der gleichen Funktion mit den gleichen Bezugszeichen gekennzeichnet.

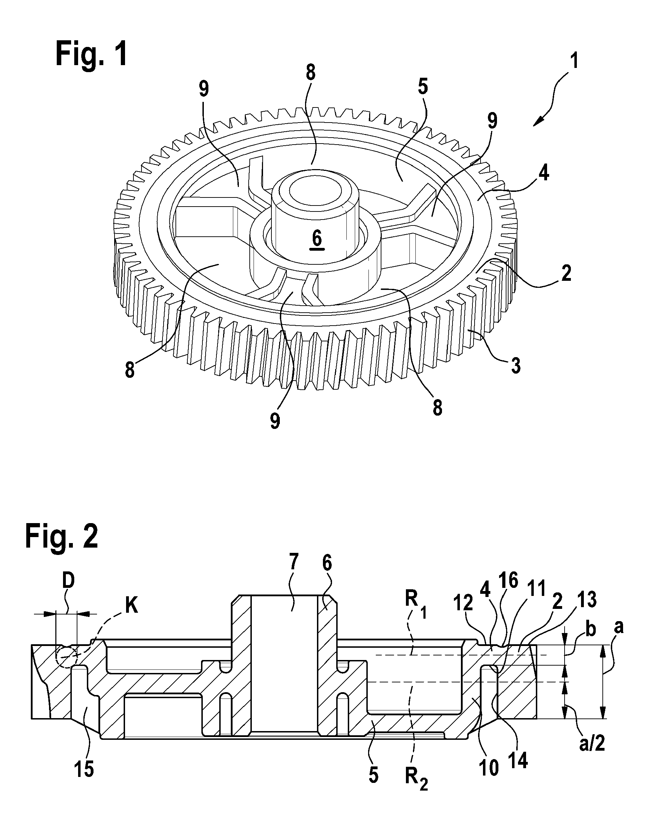

Fig. 1 zeigt ein als Kunststoff-Spritzgussteil ausgebildetes Zahnrad 1. Bei dem Zahnrad 1 handelt es sich um ein Schneckenzahnrad (Schneckenrad) zum Zusammenwirken mit einer an sich bekannten, nicht dargestellten, Getriebeschnecke. Das aus Polyoxymethylen (POM) durch Spritzgießen hergestellte Zahnrad 1 umfasst einen radial äußeren, umlaufenden Zahnkranzabschnitt 2 mit einer als Schneckenverzahnung ausgebildeten Verzahnung 3. Der Verzahnungsabschnitt 2 ist über einen umlaufenden Radialringsteg 4 an einen inneren Radabschnitt 5 des Zahnrades 1 angebunden. Der innere Radabschnitt 5 umfasst radial innen einen Nabenabschnitt 6 mit Durchgangsöffnung 7 zum rotierbaren Lagern des Zahnrades 1 auf einem Axialfortsatz eines nicht näher dargestellten, an sich bekannten Getriebegehäuses.

Auf seiner in der Zeichnungsebene oberen Stirnseite umfasst der radial innere Radabschnitt 5 drei gleichmäßig in Umfangsrichtung verteilt angeordnete Aufnahmetaschen 8 zur Aufnahme von nicht dargestellten Dämpfungselementen sowie zum axialen Eingreifen eines nicht dargestellten Mitnehmers zur Drehmomentübertragung. Jeweils zwei in Umfangsrichtung nebeneinander angeordnete Aufnahmetaschen 8 sind voneinander getrennt von einem in der Draufsicht im Wesentlichen y-förmig konturierten Steg 9, der eine radial äußere Umfangswand 10 des inneren Radabschnittes 5 mit dem Nabenabschnitt 6 verbindet.

Wie sich insbesondere aus der Schnittdarstellung gemäß Fig. 2 ergibt, verbindet der auf der axialen Mitnehmerseite angeordnete Radialringsteg 4 den Zahnkranzabschnitt 2 mit der Umfangswand 10 des inneren Radabschnittes 5. Der Radialringsteg 4 weist eine Axialerstreckung b auf, die in etwa 1/4 der Axialerstreckung a des Zahnkranzabschnittes 2 entspricht.

Wie sich weiter aus Fig. 2 ergibt, ist der Radialringsteg 4 außermittig in Bezug auf die Axialerstreckung a des Zahnkranzabschnittes 2 angeordnet. Der Abstand einer unteren, ringförmigen Stirnseite 11 des Radialringsteges 4 von der bei a/2 befindlichen Mitte des Zahnkranzabschnittes 2 entspricht etwa der Axialerstreckung b des Radialringstegs 4.

Eine gedachte, den Radialringsteg 4 in axialer Richtung mittig teilende, Radialebene R₁ ist mit Axialabstand zu einer Radialebene R₂ angeordnet, die den Zahnkranzabschnitt 2 axial mittig halbiert. Die Radialebene R₂ verläuft dabei unmittelbar durch einen Eingriffsbereich der Verzahnung 3 mit der nicht dargestellten Getriebeschnecke und nimmt die nicht dargestellte Getriebeschneckenlängsmittelachse in sich auf.

Aus Fig. 2 ergibt sich ferner, dass die in der Zeichnungsebene obere Stirnseite 12 des Radialringsteges 4 in einer, nicht eingezeichneten Radialebene mit der in der Zeichnungsebene oberen Stirnseite 13 des Zahnkranzabschnittes 2 liegt. Anders ausgedrückt bilden die äußere Umfangswand 10 des inneren Radabschnittes 5, der Radialringsteg 4 und der Zahnkranzabschnitt 2 ein in Fig. 2 auf den Kopf stehendes U, wobei die Umfangswand 10 parallel verläuft zu der radial inneren Seite 14 des Zahnkranzabschnittes 2. Der Radialringsteg 4 verbindet die beiden parallelen Schenklen des Us.

Anstatt der in Fig. 2 dargestellten Ausführungsform, bei der sich der Radialringsteg 4 in einem oberen, d.h. einem nicht dargestellten Mitnehmer zugewandten axialen Endbereich des Zahnkranzabschnittes 2 befindet, kann der Radialringsteg 4 auch im unteren axialen Endbereich des Zahnkranzabschnittes 2 angeordnet werden. Wesentlich ist, dass die beiden Radialebenen R₁, R₂ axial beabstandet sind, wobei besonders bevorzugt die Radialebene R₂ sogar axial beabstandet ist von dem Radialringsteg 4.

Zum Optimieren der Robustheit des Zahnrades 1 sind eine Vielzahl von gleichmäßig in Umfangsrichtung verteilt angeordneten Radialstegen 15 vorgesehen, die sich in dem gezeigten Ausführungsbeispiel lediglich auf der Unterseite des Radialringsteges 4 befinden und nicht auf dessen Oberseite. Die Radialstege 15 stützen den Zahnkranzabschnitt 2 unterhalb des Radialringstegs 4 über die gesamte verbleibende Axialerstreckung und verhindern somit eine unzulässige Verformung im Eingriffsbereich, also auf Höhe der Radialebene R₂ bzw. auf der Höhe der halben Axialerstreckung a/2.

Wie sich ferner aus Fig. 2 ergibt, ist unmittelbar radial zwischen dem Radialringsteg 4 und dem Zahnkranzabschnitt 2 auf der Mitnehmerseite des Zahnrades 1 eine minimale, ringförmige Eindellung 16 eingeformt.

In der linken Zeichnungshälfte von Fig. 2 ist eine gedachte Kugel K gezeigt, die in einem Übergangsbereich zwischen dem Radialringsteg 4 und dem Zahnkranzabschnitt 2 angeordnet ist, also sich in radialer Richtung sowohl in den Zahnkranzabschnitt 2 als auch in den Radialringsteg 4 hinein erstreckt. Die Kugel K ist vollständig aufgenommen im Kunststoffmaterial des Zahnrades 1 und weist einen Durchmesser D von 1,4mm auf.

## Patentansprüche

1. Kunststoff-Spritzguss-Zahnrad, umfassend einen äußeren Zahnkranzabschnitt (2), der über einen umlaufenden Radialringsteg (4) mit einem inneren Radabschnitt (5) verbunden ist,
**dadurch gekennzeichnet,**
**dass** der Radialringsteg (4) axial außermittig in Bezug auf die Axialerstreckung des Zahnkranzabschnittes (2) angeordnet ist.

2. Zahnrad nach Anspruch 1,
**dadurch gekennzeichnet,**
**dass** der Radialringsteg (4) in einem axialen Endbereich des Zahnkranzabschnittes (2) angeordnet ist.

3. Zahnrad nach Anspruch 2,
**dadurch gekennzeichnet,**
**dass** der Radialringsteg (4) bündig mit einer axialen Stirnseite (13) des Zahnkranzabschnittes (2) abschließt.

4. Zahnrad nach einem der vorhergehenden Ansprüche,
**dadurch gekennzeichnet,**
**dass** ausschließlich auf einer Axialseite des Radialringsteges (4) in Umfangsrichtung beabstandete Radialstege (15) zur Anbindung des Zahnkranzabschnittes (2) an den inneren Radabschnitt (5) vorgesehen sind.

5. Zahnrad nach Anspruch 4,
**dadurch gekennzeichnet,**
**dass** die Radialstege (15) gleichmäßig in Umfangsrichtung verteilt angeordnet sind.

6. Zahnrad nach einem der vorhergehenden Ansprüche,
**dadurch gekennzeichnet,**
**dass** in einen Übergangsbereich zwischen dem Radialringsteg (4) und dem Zahnkranzabschnitt (2) eine gedachte Kugel (K) mit einem Durchmesser (D) von weniger als etwa 1,6mm, vorzugsweise von etwa 1,4 mm oder weniger legbar ist.

7. Zahnrad nach einem der vorhergehenden Ansprüche,
**dadurch gekennzeichnet,**
**dass** das Zahnrad (1) aus einem Thermoplast, insbesondere Polyoxymethylen, gespritzt ist.

8. Zahnrad nach einem der vorhergehenden Ansprüche,
**dadurch gekennzeichnet,**
**dass** der Zahnkranzabschnitt (2) eine Schneckenverzahnung aufweist.

9. Getriebe, insbesondere Schneckengetriebe, mit einem Zahnrad (1) nach einem der vorhergehenden Ansprüche.

10. Verstellantrieb, insbesondere für Kraftfahrzeug-Anwendungen, vorzugsweise Fensterheberantrieb, umfassend einen ein Getriebe nach Anspruch 9 antreibenden Motor.
